# EUROPÄISCHE PATENTANMELDUNG

(11) **EP 1 235 000 A1**
(43) Veröffentlichungstag der Anmeldung: **28.08.2002**
(21) Anmeldenummer: 02003176.1
(22) Anmeldetag: 15.02.2002
(51) Int. Cl.: F16G 13/10, F16C 1/04

(54) **Gliederkette**

(30) Priorität: 26.02.2001 DE 10109190
(71) Anmelder: Micro Mechatronic Technologies GmbH & Co. KG, 57080 Siegen (DE)
(72) Erfinder: Hempelmann, Willi, Dipl.-Ing., 57462 Olpe (DE)
(74) Vertreter: Klingseisen, Franz, Dipl.-Ing.

(57) **Zusammenfassung**

Es wird eine Gliederkette bzw. ein Kettenabschnitt vorgesehen, deren bzw. dessen Kettenglieder (1) um 90° zueinander versetzte Gabelabschnitte (2, 2') aufweisen, die mit benachbarten Kettengliedern (1') durch sich kreuzende Gelenkstifte (4, 5) verbunden sind, wobei die Gelenkstifte (4, 5) selbst miteinander verbunden sind.

## Beschreibung

Die Erfindung betrifft eine Gliederkette.

Aufgabe der Erfindung ist es, eine Gliederkette so auszubilden, dass sie für verschiedene Steuer- und Führungszwecke in verschiedenen Bereichen eingesetzt werden kann.

Diese Aufgabe wird erfindungsgemäß dadurch gelöst, dass die Kettenglieder um 90° zueinander versetzte Gabelabschnitte aufweisen, die mit benachbarten Kettengliedern durch sich kreuzende Gelenkstifte verbunden sind, wobei die Gelenkstifte selbst miteinander verbunden sind.

Eine Kette dieser Art kann dreidimensionale Bahnen im Raum durchlaufen, und es ist auch möglich, Drehmomente mit einem solchen Kettenaufbau zu übertragen, wodurch sich vielfältige Einsatzgebiete ergeben.

Beispielsweise Ausführungsformen der Erfindung werden nachfolgend anhand der Zeichnungen näher erläutert. Es zeigen
- Fig. 1: eine perspektivische Ansicht einer Ausführungsform der Gliederkette in gerader Ausrichtung,
- Fig. 1a: einen Querschnitt durch einen Lagerkörper
- Fig. 2: die abgewandelte Ausführungsform der Gliederkette nach Fig. 1 in einer räumlichen Kurve,
- Fig. 3: eine perspektivische Ansicht zweier Kettenglieder nach einer anderen Ausführungsform in abgewinkelter Stellung relativ zueinander in einer Ansicht von oben,
- Fig. 4: die Kettenglieder nach Fig. 3 in gestreckter Stellung in einer Ansicht von unten,
- Fig. 5: eine Ausführungsform der Gliederkette nach Fig. 3 und 4 in Verbindung mit einer abgewinkelten Führung in perspektivischer Ansicht,
- Fig. 6: eine Seitenansicht der Ausführungsform nach Fig. 5
- Fig. 7: die Gliederkette nach den Fig. 5 und 6 in einer geraden Führung,
- Fig. 8: eine schematische Ansicht eines Kettengliedes von unten und oben, und
- Fig. 9: einen Querschnitt durch eine U-förmige Führung mit einem Kettenglied.

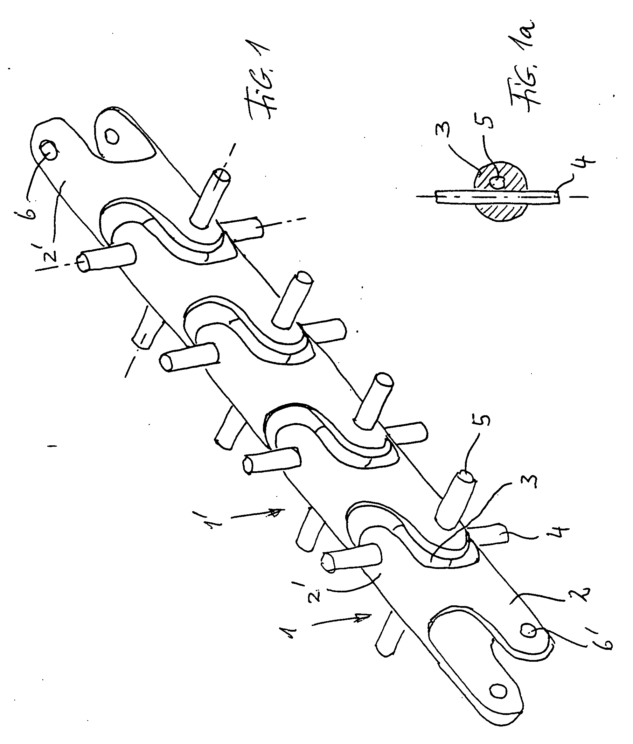

Fig. 1 zeigt eine Ausführungsform einer Gliederkette, deren einzelne Kettenglieder 1, 1' im Wesentlichen aus zwei um 90° zueinander versetzten Gabelabschnitten 2 und 2' ausgebildet sind, die jeweils mit dem Bodenteil der Gabel miteinander verbunden sind, so dass die Gabelabschnitte in entgegengesetzte Richtung weisen. Zwischen den einzelnen Kettengliedern 1 ist ein Lagerkörper 3 angeordnet, der sich im Winkel von 90° kreuzende Gelenkstifte 4 und 5 trägt. Der Gelenkstift 4 ist in eine Bohrung 6 an den Enden der Schenkel des Gabelabschnitts 2' eingesetzt, während der quer dazu liegende Gelenkstift 5 in Bohrungen 6' an den Enden der Schenkel des Gabelabschnitts 2 des benachbarten Kettengliedes eingesetzt ist.

Fig. 1a zeigt einen Querschnitt durch einen Lagerkörper 3 mit den beiden Gelenkstiften 4 und 5, die nebeneinander in dem beispielsweise aus einer Kugel aus Kunststoff bestehenden Lagerkörper 3 fest angebracht sind. Durch die Anordnung der Gelenkstifte 4 und 5 nebeneinander wird eine kostengünstige Herstellung erreicht. Es ist aber auch möglich, die Gelenkstifte 4 und 5 in Form eines Kreuzes bzw. so anzuordnen, dass sich die Achsen der Gelenkstifte schneiden.

Die Gelenkstifte 4 und 5 stehen bei der Ausführungsform nach Fig. 1 über die Außenfläche der Kettenglieder 1 vor, so dass die freien Enden der Gelenkstifte in eine nicht dargestellte Führung eingreifen können. Bei der gestreckten Anordnung nach Fig. 1 können beispielsweise die nach unten vorstehenden Enden der Gelenkstifte in einem geraden Führungskanal geführt sein.

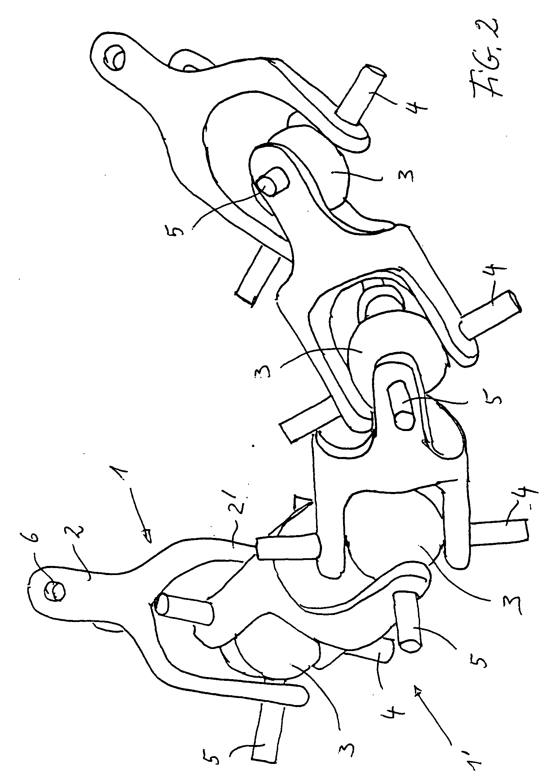

Fig. 2 zeigt eine Gliederkette entsprechend Fig. 1, wobei die Gliederkette in einer räumlich gekrümmten Kurve verwunden ist. Hierbei können die oben und unten vorstehenden Enden beispielsweise der Gelenkstifte 5 in einer entsprechend räumlich gekrümmten Führungsbahn geführt sein. Damit die Gliederkette nach Fig. 2 einer beliebigen Kurve im Raum folgen kann, sind die Schenkel der gegenüberliegenden Gabelabschnitte 2 und 2' schlanker ausgeführt als bei der Ausführungsform nach Fig. 1, so dass sich ein größerer Abstand der Schenkel der gegenüberliegenden Gelenkabschnitte voneinander ergibt. Durch den größeren Abstand der Schenkel der gegenüberliegenden Gabelabschnitte voneinander kann sich die Kette längs engerer Kurven im Raum bewegen, während bei der breiteren Ausführungsform der Schenkel bzw. einem geringeren Abstand der Schenkel voneinander, wie dies Fig. 1 zeigt, nur Kurven mit einem größeren Radius durchlaufen werden können.

Bei beiden Ausführungsformen in den Fig. 1 und 2 haben die Schenkel der jeweiligen Gabelabschnitte den gleichen Abstand voneinander, wobei die Gabelabschnitte 2 und 2' auf den beiden Seiten eines Kettengliedes 1 identisch ausgebildet sind.

Bei der dargestellten Ausführungsform sind die Gelenkstifte 4 und 5 in dem Lagerkörper 3 fest angebracht und in den Bohrungen 6 und 6' der Kettenglieder verdrehbar gelagert. Es ist aber auch möglich, die Gelenkstifte im Lagerkörper verdrehbar zu lagern und in den Bohrungen der Gabelabschnitte fest einzusetzen. Durch die beschriebene Ausgestaltung ergibt sich eine kardanische Lagerung zwischen benachbarten Kettengliedern. Bei der gestreckten Anordnung nach Fig. 1 kann die Gliederkette ohne eine Führung an den Gelenkstiften auch zur Übertragung von Drehmomenten verwendet werden.

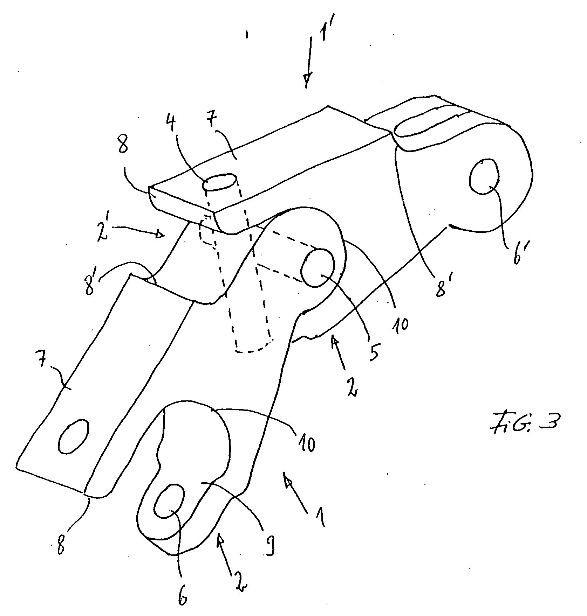

Fig. 3 bis 8 zeigen eine abgewandelte Ausführungsform der Gliederkette, die für eine Umlaufbewegung in einer Ebene ausgestaltet ist, so dass eine Abwinkelung zwischen zwei Kettengliedern nur in einer Richtung erforderlich ist.

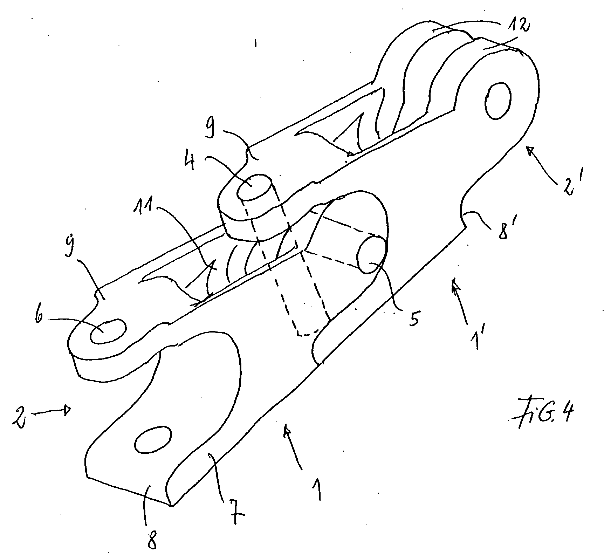

Fig. 3 zeigt zwei Kettenglieder 1 und 1' in einer abgewinkelten Stellung von oben. Die oberen Schenkel 7 des Gabelabschnitts 2 sind in der Draufsicht rechteckig ausgebildet, wobei die freie Stirnseite 8 dieser Schenkel 7 nach innen abgerundet ausgebildet ist und in einen entsprechend abgerundeten Absatz 8' am Übergang zum Gabelabschnitt 2' eingreift, wie dies Fig. 4 in einer Ansicht der beiden Kettenglieder von unten zeigt. Der untere Schenkel 9 des Gabelabschnitts 2 ist am freien Ende um die Bohrung 6 abgerundet. Der Übergang 10 zwischen den beiden Schenkeln 7 und 9 ist quer zur Achse der Bohrung 6 abgerundet.

Auf der gegenüberliegenden Seite des Kettengliedes ist der Gabelabschnitt 2' um die Bohrung 6' entsprechend dem Übergang 10 abgerundet ausgebildet und er greift in den abgerundeten Übergang 10 zwischen den Schenkeln 7 und 9 des Gabelabschnitts 2 des benachbarten Kettengliedes 1' ein, so dass um den Gelenkstift 5 eine Schwenkbewegung der beiden Kettenglieder 1 und 1' relativ zueinander erfolgen kann, während eine Schwenkbewegung um den Gelenkstift 4 nicht möglich ist.

Wie aus der Ansicht von unten in Fig. 4 erkennbar, ist zwischen dem Schenkel 9 des Gabelabschnitts 2 und dem Gabelabschnitt 2' eine Vertiefung 11 in jedem Kettenglied ausgebildet, in die das um den Gelenkstift 4 abgerundete Ende des Schenkels 9 des benachbarten Kettengliedes eintauchen kann, wenn die beiden Kettenglieder um den Gelenkstift 5 eine Schwenkbewegung relativ zueinander ausführen, wie sie Fig. 3 zeigt.

Während zwischen den Schenkeln 7 und 9 des Gabelabschnitts 2 der gesamte Gabelabschnitt 2' des benachbarten Kettengliedes aufgenommen wird, wird zwischen den beiden gleich gestalteten Schenkeln 12 des gegenüberliegenden Gabelabschnitts 2' im wesentlichen nur der Gelenkstift 4 des benachbarten Kettengliedes aufgenommen, weswegen zwischen den Schenkeln 12 nur eine entsprechend enge schlitzförmige Ausnehmung am Gabelabschnitt 2' ausgebildet ist, die ebenfalls einen abgerundeten Übergang zwischen den Schenkeln 12 im Wesentlichen entsprechend dem Durchmesser des Gelenkstifts 4 aufweist.

Die senkrecht zueinander liegenden Gelenkstifte 4 und 5 können aneinander liegen und fest miteinander verbunden sein, beispielsweise können sie durch Spritzgießen einstückig ausgebildet werden. Ein Lagerkörper 3, wie er bei der Ausführungsform nach den Fig. 1 und 2 vorgesehen ist, ist bei der Ausführungsform nach den Fig. 3 und 4 weggelassen, damit durch den geringeren Platzbedarf für die beiden Gelenkstifte 4 und 5 die Kettenglieder selbst entsprechend stärker ausgebildet werden können.
Es ist auch möglich, die beiden Gelenkstifte 4 und 5 unabhängig voneinander in den jeweiligen Bohrungen 6 der Gabelabschnitte 2 und 2' einzusetzen, wobei die Schwenkbewegung um den Gelenkstift 5 erfolgt und der Gelenkstift 4 nur für den Zusammenhalt der beiden Kettenglieder dadurch dient, dass er den Gelenkstift 5 im Gabelabschnitt 2 des Kettengliedes hält.

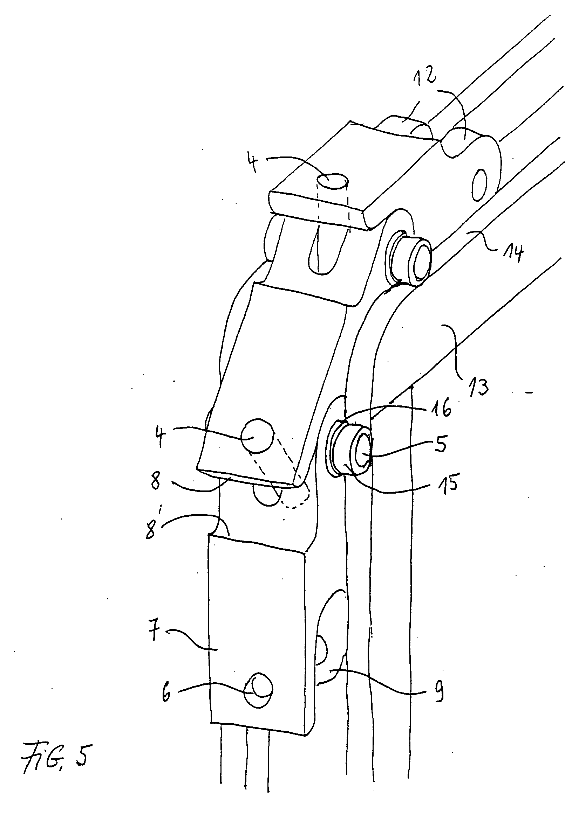

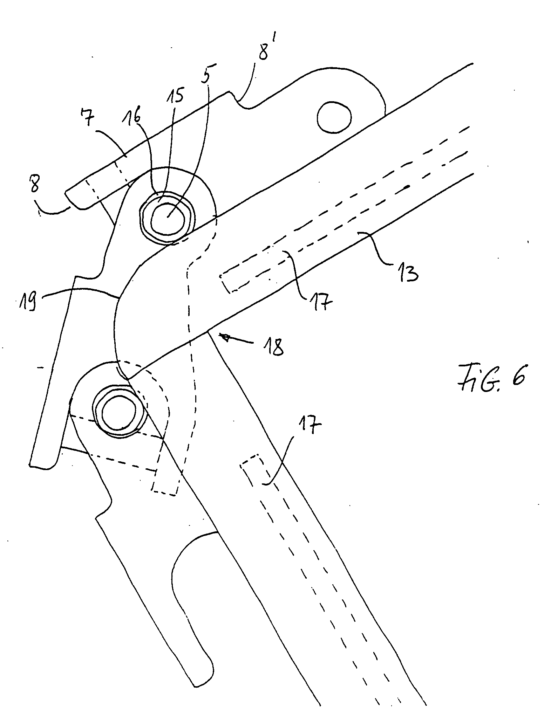

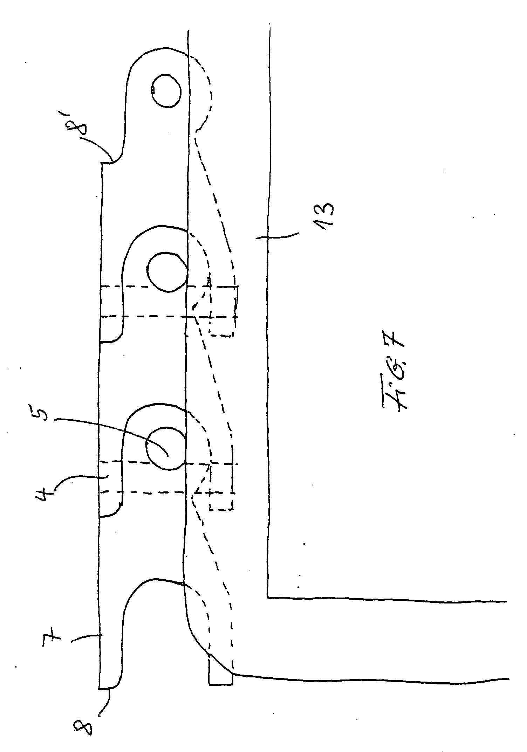

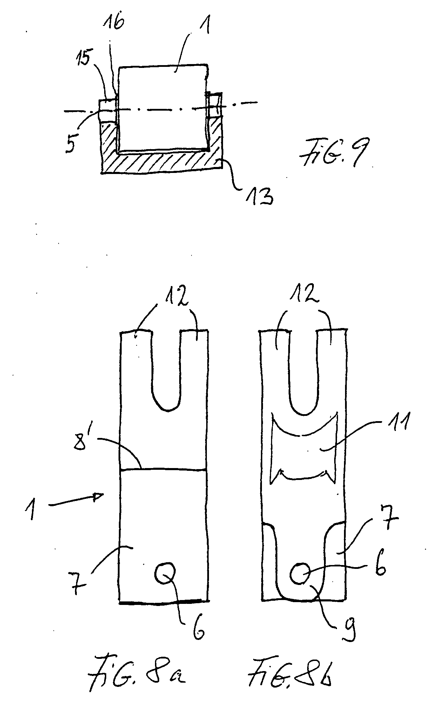

Fig. 5 bis 7 zeigen drei Kettenglieder entsprechend der Ausführungsform nach den Fig. 3 und 4 in Verbindung mit einer U-förmigen Führung 13, die beispielsweise in einem Rahmen mit Ecken von 90° ausgebildet ist. Die Kettenglieder haben quer zur Bewegungsrichtung einen im wesentlichen rechteckigen Querschnitt im Übergangsbereich zwischen den beiden Gabelabschnitten 2 und 2', wie dies auch Fig. 8 und 9 zeigen, wobei sich die beiden Seitenflächen auf der einen Seite im Wesentlichen längs der Schenkel 12 und auf der anderen Seite nur längs des Schenkels 7 erstrecken. Die Ober- und Unterseiten des Rechteckquerschnitts erstrecken sich auch nur auf der Ober- und Unterseite der Schenkel 7 und 9. Die beiden Seitenflächen eines Kettengliedes können als Führungsflächen verwendet werden, die längs der Seitenflächen der U-förmigen Führung 13 entlang gleiten.

Bei der dargestellten Ausführungsform dient die Oberseite 14 an den beiden Schenkeln der U-Führung 13 als Führungsfläche für Rollen 15, die an den seitlich vorstehenden Enden der Gelenkstifte 5 aufgesetzt sind. Die Kettenglieder müssen somit mit der in Fig. 4 oben gezeigten Unterseite nicht am Boden der U-Führung 13 aufliegen, sie können nur durch die Rollen 15 abgestützt und geführt werden.

Damit die Seitenflächen der Kettenglieder einen geringen Abstand von den Seitenflächen der U-Führung 13 haben können, ist an den Rollen 15 jeweils ein Flanschabschnitt 16 ausgebildet, mit dem eine Rolle die innen liegende Kante an der Auflagefläche 14 übergreift, wie dies aus Fig. 6 ersichtlich ist.

Fig. 6 zeigt eine Seitenansicht der Kettenführung 13 mit den drei Kettengliedern in der Stellung nach Fig. 5, wobei mit 17 der Boden der U-Führung wiedergegeben ist, der im Bereich der Ecke 18 ausgespart ist, damit sich ein Kettenglied ungehindert um die Abrundung 19 auf der Außenseite an der Ecke des rechtwinkligen Rahmens bewegen kann.

Fig. 7 zeigt die Anordnung der drei Kettenglieder in gestreckter Ausrichtung in der U-Führung 13, wobei die nach innen abgerundete Stirnseite 8 an den Schenkeln 7 an dem komplementär gestalteten Absatz 8' im Übergangsbereich zwischen den Gabelabschnitten des benachbarten Kettengliedes anliegt. Hierdurch wird ein Anschlag ausgebildet, der ein Verschwenken zweier Kettenglieder relativ zueinander um den Gelenkstift 5 nach oben in Fig. 7 verhindert und die geradlinige Führung der Kette unterstützt.

Fig. 8a zeigt ein einzelnes Kettenglied 1 in einer Draufsicht, während Fig. 8b das gleiche Kettenglied in einer Ansicht von unten wiedergibt. Aus dieser schematischen Darstellung in Fig. 8 wird der rechteckige Querschnitt der Kettenglieder im Übergangsbereich zwischen den beiden Gabelabschnitten 2 und 2' deutlich.

Bei der dargestellten Ausführungsform nach den Fig. 3 bis 8 kann der Stift 4 auf der Oberseite an einzelnen Kettengliedern vorstehen, um beispielsweise eine Steuerfünktion in Verbindung mit einem nicht dargestellten Steuerelement an einer vorgegebenen Stelle der Umlaufbahn der Kette auszuführen.

Im Gegensatz zu der Ausführungsform nach den Fig. 1 und 2 haben bei der Ausführungsform nach den Fig. 3 bis 8 die Schenkel der gegenüberliegenden Gabelabschnitte eines Kettengliedes einen unterschiedlichen Abstand voneinander, nachdem der Gabelabschnitt 2 im Wesentlichen den gesamten Gabelabschnitt 2' des benachbarten Kettengliedes aufnimmt und dabei die Schenkel 7 und 9 die Schenkel 12 des Gabelabschnittes 2' außen übergreifen, während der gegenüberliegende Gabelabschnitt 2' lediglich den Gelenkstift 4 zwischen seinen Schenkeln 12 aufnimmt.

Es sind weitere Abwandlungen der beschriebenen Ausführungsform möglich, je nach dem Einsatzzweck der Gliederkette und der von ihr auszuführenden Transport- oder Steuerfunktionen. So können beispielsweise Kettenelemente mit zwei, drei oder mehreren Kettengliedern als Übertragungselemente zwischen zwei Bauteilen eingesetzt werden.

Nach einer anderen Ausgestaltung können die vorstehenden Gelenkstifte der Gliederkette oder eines Abschnitts der Gliederkette in der Gewindenut einer drehbaren, von einem Elektromotor angetriebenen Schnecke geführt werden, um mit der Drehbewegung der Schnecke einen axialen Vorschub an der Kette zu erzeugen. Beispielsweise können in Fig. 5 die Gelenkstifte 4 nach oben vorstehend in eine Antriebsschnecke eingreifen.

Es ist auch möglich, bei einem Kettenabschnitt von beispielsweise 200 mm an einem Kettenglied mit vorstehendem Gelenkstift z. B. mittels eines mit dem vorstehenden Gelenkstift kämmenden Zahnrad ein Drehmoment in den Kettenabschnitt einzuleiten. Hierbei kann beispielsweise ein Ende des Kettenabschnitts mit einer Kupplung verbunden sein. Es kann auch an einem Ende eines Kettenabschnitts ein Antriebsmotor vorgesehen sein, der ein Drehmoment in den Kettenabschnitt einleitet, wobei an verschiedenen Kettengliedern über vorstehende Gelenkstifte das Drehmoment für Steuerzwecke oder dergleichen abgenommen werden kann.

Bei der Montage der Kette werden die Gelenkstifte 4 und 5 beispielsweise in den Lagerkörper 3 eingepreßt.

## Patentansprüche

1. Gliederkette bzw. Kettenabschnitt, deren bzw. dessen Kettenglieder (1) um 90° zueinander versetzte Gabelabschnitte (2, 2') aufweisen, die mit benachbarten Kettengliedern (1') durch sich kreuzende Gelenkstifte (4, 5) verbunden sind, wobei die Gelenkstifte (4, 5) selbst miteinander verbunden sind.

2. Kette nach Anspruch 1, wobei die beiden Gelenkstifte (4, 5) durch einen Lagerkörper (3) miteinander verbunden sind.

3. Kette nach den Ansprüchen 1 und 2, wobei die Achsen der beiden Gelenkstifte (4, 5) sich in einem Abstand voneinander kreuzen.

4. Kette nach den vorhergehenden Ansprüchen, wobei wenigstens einer der beiden Gelenkstifte (4, 5) über die Außenfläche der Kettenglieder vorsteht.

5. Kette nach Anspruch 4, wobei die vorstehenden Gelenkstifte (5) in oder an einer Führung (13, 14) geführt sind.

6. Kette nach den vorhergehenden Ansprüchen, wobei die Kettenglieder (1) auf den gegenüberliegenden Seiten gleich gestaltete Gabelabschnitte (2, 2') aufweisen.

7. Kette nach den Ansprüchen 1 bis 5, wobei die Kettenglieder unterschiedlich gestaltete Gabelabschnitte (2, 2') aufweisen.

8. Kette nach Anspruch 7, wobei der Gabelabschnitt (2) mit seinen Schenkeln (7, 9) den Gabelabschnitt (2') des benachbarten Kettengliedes übergreift, während am Gabelabschnitt (2') die beiden Schenkel (12) den Gelenkstift (4) des benachbarten Kettengliedes aufnehmen.

9. Kette nach Anspruch 8, wobei die Kettenglieder (1) in der Draufsicht eine rechteckige Umrißform haben und im Übergangsbereich zwischen den Gabelabschnitten (2, 2') einen rechteckigen Querschnitt aufweisen.

10. Kette nach Anspruch 9, wobei der Schenkel (7) des Gabelabschnitts (2) eines Kettengliedes (1) eine Rechteckform aufweist und die Stirnseite (8) dieses Schenkels (7) in der gestreckten Stellung der Kettenglieder relativ zueinander an einem Absatz (8') an der Rückseite des rechteckigen Schenkels (7) des benachbarten Kettengliedes (1') anliegt.

11. Kette bzw. Kettenabschnitt nach den vorhergehenden Ansprüchen, wobei die Kette bzw. ein Kettenglied mit einer Antriebseinrichtung verbunden ist.

12. Kette bzw. Kettenabschnitt nach Anspruch 11, wobei die an den Kettengliedern vorstehenden Gelenkstifte (4) in einer Gewindenut einer angetriebenen Schnecke geführt sind.

13. Kette bzw. Kettenabschnitt nach Anspruch 11, wobei über wenigstens einen vorstehenden Gelenkstift eines Kettengliedes ein Drehmoment in einen Kettenabschnitt eingeleitet wird, beispielsweise durch eine mit dem vorstehenden Gelenkstift in Eingriff tretende Dreheinrichtung, beispielsweise ein Zahnrad.
